# EUROPEAN PATENT APPLICATION

(11) **EP 2 677 225 A2**
(43) Date of publication of application: **25.12.2013**
(21) Application number: 13172873.5
(22) Date of filing: 19.06.2013
(51) Int. Cl.: F16L 37/091

(54) **Coupling and joint for fixedly and sealingly securing components to one another**

(30) Priority: 22.06.2012 US 201213531014
(71) Applicant: Mueller Industries, Inc., Memphis TN 38125 (US)
(72) Inventor: Jamison, Tommy L., Hernando, MS Mississippi 38632 (US); Stout, Charles A., Collierville TN 38017 (US); Elmer, Marcus R., Cordova, TN 38018 (US); Thomas, Adam L., Baldwinsville NY 13027 (US)
(74) Representative: Stuttard, Garry Philip

(57) **Abstract**

An assembly (10) having a fitting body (20), a structure (12), a first seal element (22), and a grip ring (24). The fitting body (20) has an insertion end (26) that includes a mount (40) and an abutting wall (30). The structure (12) has an end (36) that is received into the insertion end (26) of the fitting body (20). The first seal element (22) is received in the mount (40) and sealingly engaged to the structure (12) and the fitting body (20). The grip ring (24) is received in the mount (40) and includes a ring body (60) and a plurality of first teeth (62) that are resiliently coupled to a ring body (60). The first teeth (62) are engaged to the end (36) of the structure (12) and the ring body (60) abuts the abutting wall (30).

## Description

The present invention generally relates to fluid conduit systems that may be employed, for example, for routing and delivering potable water, gases or chemicals.

This section provides background information related to the present disclosure which is not necessarily prior art.

There has long been a need for joining two components in a manner that fixedly and sealingly couples the components to one another. One extremely common application concerns the coupling of copper tubing that is commonly employed to transmit potable water in a building.

One system for joining components is disclosed in U.S. Patent No. 7,316,429, which discloses connection piece having a sealing ring, a cutting ring and a T-shaped separating ring that spaces the sealing ring apart from the cutting ring. This system can be relatively expensive and as such, there remains a need in the art for an improved joining system.

This section provides a general summary of the disclosure, and is not a comprehensive disclosure of its full scope or all of its features.

In one form the present teachings provide an assembly having a fitting body, a structure, a first seal element, and a grip ring. The fitting body has an insertion end that includes a mount and an abutting wall. The structure has an end that is received into the insertion end of the fitting body. The first seal element is received in the mount and sealingly engaged to the structure and the fitting body. The grip ring is received in the mount and includes a ring body and a plurality of first teeth that are resiliently coupled to a ring body. The first teeth are engaged to the end of the structure and the ring body abuts the abutting wall.

In another form, the present teachings provide an assembly having a fitting body, a structure, a first seal element and a grip ring. The fitting body has an insertion end that includes a mount. The mount includes a first annular cavity and a second annular cavity. The first annular cavity is defined by a first wall member, which is disposed generally perpendicular to a longitudinal axis of the fitting body, and a second wall member having a generally V-shaped profile. The second annular cavity is defined by the second wall member and a third wall member. The structure has an end that is received into the insertion end of the fitting body. The first seal element is received in the second annular cavity and is disposed between the second and third wall members. The first seal element is sealingly engaged to the structure and the fitting body. The grip ring is received in the first annular cavity and includes a ring body and a plurality of first teeth that are resiliently coupled to a ring body. The first teeth are engaged to the end of the structure. The ring body abuts the first wall member.

Further areas of applicability will become apparent from the description provided herein. The description and specific examples in this summary are intended for purposes of illustration only and are not intended to limit the scope of the present disclosure.

The drawings described herein are for illustrative purposes only of selected embodiments and not all possible implementations, and are not intended to limit the scope of the present disclosure.

Figure 1 is a schematic illustration of an exemplary assembly constructed in accordance with the teachings of the present disclosure;

Figure 2 is a side elevation view of a portion of the assembly of Figure 1;

Figure 3 is a longitudinal section view of the portion of the assembly that is illustrated in Figure 2;

Figure 4 is a perspective view of a portion of the assembly of Figure 1, illustrating the grip ring in more detail;

Figure 5 is a longitudinal section view of a portion of a second assembly constructed in accordance with the teachings of the present disclosure;

Figure 6 is a longitudinal section view of a portion of a third assembly constructed in accordance with the teachings of the present disclosure;

Figure 7 is a longitudinal section view of a portion of a fourth assembly constructed in accordance with the teachings of the present disclosure;

Figure 8 is a perspective view of a portion of a fifth assembly constructed in accordance with the teachings of the present disclosure; and

Figure 9 is a longitudinal cross-sectional view of the portion of the assembly of Figure 8.

Corresponding reference numerals indicate corresponding parts throughout the several views of the drawings.

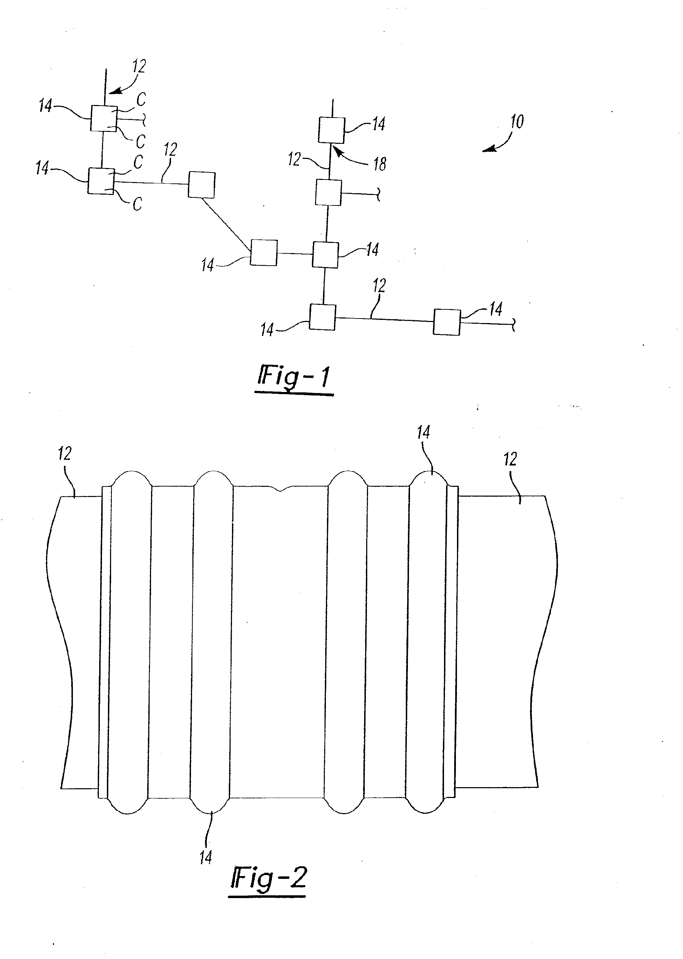

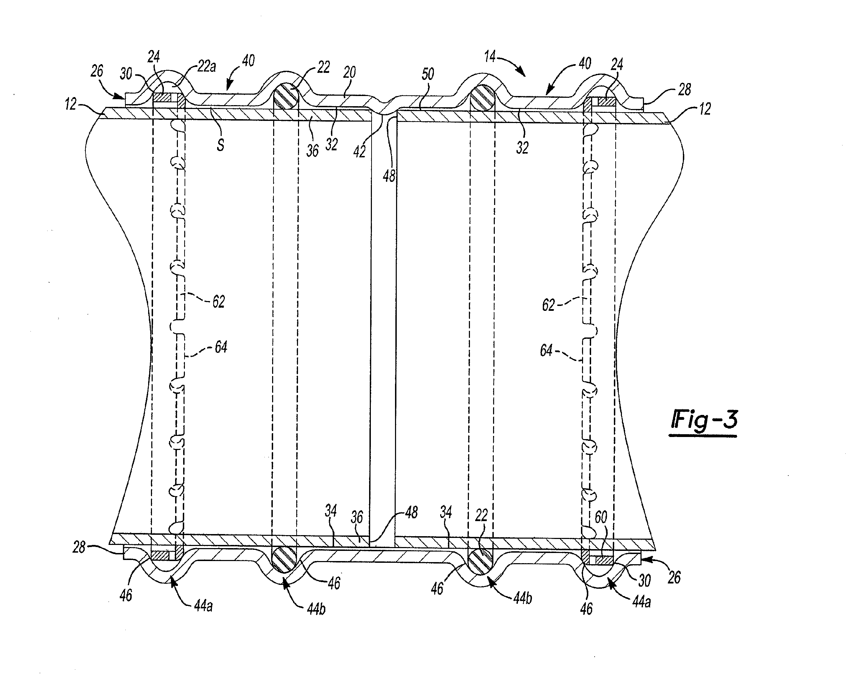

With reference to Figure 1 of the drawings, an assembly constructed in accordance with the teachings of the present invention is generally indicated by reference numeral 10. With additional reference to Figures 2 and 3, the assembly 10 can include a component or structure 12 and a fitting 14. In the particular example illustrated, the assembly 10 is suited for use in communicating (i.e., supplying, delivering, routing) a fluid, such as a gas or liquid and as such, the structure 12 is illustrated to be a length of tubing. More particularly, the structure 12 in the particular embodiment illustrated is a length of drawn (full hard) copper tubing that is suitable for use in a system for the transmission of potable water. It will be appreciated, however, that the teachings of the present invention have broader applicability and as such, the scope of the present disclosure (and appended claims) is not limited to the particular application of the invention described and illustrated herein but rather extends to any joint wherein the components of the joint are fixedly and sealingly joined in the manner disclosed herein. In this regard, it will be appreciated that the structure 12 need not be a tubular structure but rather could be any structure, such as a shaft, that sufficiently corresponds in size and shape to the fitting 14 so that a sealed or fluid-tight joint or connection may be formed therebetween.

In Figures 2 and 3, the fitting 14 can include a body 20, a seal element 22 and a grip ring 24. It will be appreciated that although the particular fitting illustrated is a straight union, the teachings of the present invention have applicability to various other types of fittings, including elbows, tees, caps, adapters, reducers, bushings, etc.

The body 20 can be made from any structural but ductile material, such as copper, brass, bronze, stainless steel or another metal. In the example provided, the body 20 is made of a copper alloy so as to eliminate the potential for a galvanic reaction with the copper alloy of the structure 12. The body 20 can include a hollow insertion end 26 that can have an end face 28, an abutting wall 30 and an interior surface 32. A cavity 34 defined by insertion end 26 can be configured to receive an associated end 36 of the structure 12.

Optionally, the body 20 can include a mount 40 and a stop 42. The mount 40 can be configured to hold and position the seal element 22 and/or the grip ring 24, while the stop 42 can be a feature that inhibits the insertion of the structure 12 into the cavity 34 beyond a predetermined distance. For example, the mount 40 can define a pair of annular cavities 44a, 44b having a semi-toric inner surface 46 and the stop 42 can comprise a necked down area and/or one or more dimples and/or an annular roll (formed in the body 20) that can extend into the cavity 34 such that an axial end face 48 of the end 36 of the structure 12 can contact the stop 42 to limit an amount by which the end 36 is inserted into the body 20.

The seal element 22 can be any type of seal that is configured to sealingly engage the interior surface 32 of the insertion end 26 and an exterior surface 50 of the end 36 of the structure 12. In the particular example provided, the seal element 22 comprises an O-ring that is received in the annular cavity 44b and is sized to sealingly engage the interior and exterior surfaces 32 and 50 upon insertion of the end 36 of the structure 12 into the insertion end 26 of the body 20 and through the seal element 22. It will be appreciated, however, that the seal element 22 could be configured to sealingly engage the interior surface 32 and/or the exterior surface 50 only after the body 20 has been secured to the structure 12 to inhibit axial movement of the fitting 14 relative to the structure 12.

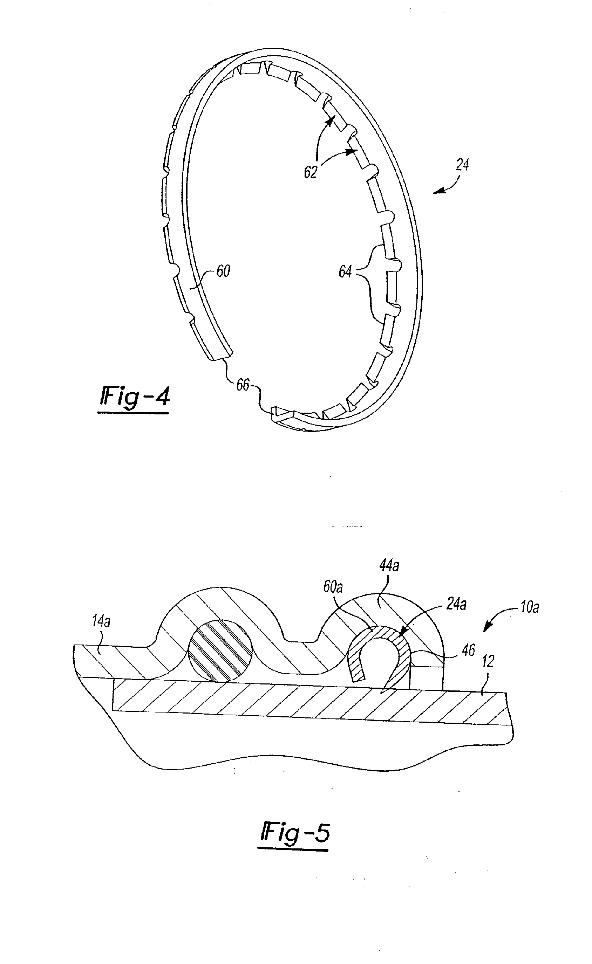

With reference to Figures 3 and 4, the grip ring 24 can be configured to permit the end 36 of the structure 12 to be inserted into the insertion end 26 but resist withdrawal of the end 36 of the structure 12 from the insertion end 26. The grip ring 24 can have a ring body 60 and a plurality of gripping elements 62 that can be coupled to the ring body 60. In the particular example provided, the ring body 60 defines a circumferentially extending structure that is abutted against the abutting wall 30, while the gripping elements 62 comprise circumferentially spaced-apart teeth 64 that are resiliently coupled to a proximal end of the ring body 60. The teeth 64 can extend from the ring body 60 in direction that is radially-inward and axially away from the proximal end 36 of the ring body 60. The grip ring 24 can be received in the cavity 34 in the insertion end 26 and can be coupled to the body 20 in a manner that limits movement of the grip ring 24 in an axial direction relative to the body 20 (e.g., such that movement of the grip ring 24 in a direction that would withdraw the grip ring 24 from the insertion end 26 causes the grip ring 24 to contact the abutting wall 30). In the example provided, the grip ring 24 is received in the annular cavity 44a in the mount 40 such that grip ring 24 impinges on the semi-toric inner surface 46 to thereby limit axial movement of the grip ring 24.

In the example provided, the grip ring 24 has open ends 66, which permits the grip ring 24 to be inserted into the annular cavity 44a after the body 20 of the fitting 14 has been formed. It will be appreciated, however, that the grip ring 24 can be formed in an endless manner and that in such case, it may be desirable to install the grip ring 24 into the fitting 14 prior to the formation of the abutting wall 30.

Returning to Figures 1 and 3, the fitting 14 can be coupled to the structure 12 by inserting the end 36 of the structure 12 into the insertion end 26 and forcing the end 36 axially through the grip ring 24 and the seal element 22. The seal element 22 may be configured such that it does not sealingly engage one or both of the interior surface 32 of the insertion end 26 (i.e., the semi-toric inner surface 46 in the particular example provided) and the exterior surface 50 of the end 36 of the structure 12. In the particular example provided, however, the seal element 22 sealingly engages both the interior surface 32 of the insertion end 26 (i.e., the semi-toric inner surface 46 in the particular example provided) and the exterior surface 50 of the end 36 of the structure 12 when the end 36 of the structure 12 is inserted through the seal element 22. It will be appreciated that the grip ring 24 is configured to inhibit axial withdrawal of the end 36 of the structure 12 from the insertion end 26. A commercially-available crimping tool (not shown), such as CT400 crimp tool marketed by Rigid or an M20+ crimp tool marketed by Stanley Bostitch, can be employed to deform the insertion end 26 of the fitting 14 (schematically indicated by reference letter C in Figure 1) to substantially permanently couple the fitting 14 to the structure 12. Additionally or alternatively, insertion end 26 of the fitting 14 could be deformed by the commercially available crimping tool to create or improve sealing engagement of the seal element 22 with the interior surface 32 of the insertion end 26 (i.e., the semi-toric inner surface 46 in the particular example provided) and/or the exterior surface 50 of the end 36 of the structure 12.

While the grip ring 24 has been illustrated and described as being axially closer to the end face 28 of the insertion end 26, it will be appreciated that the positions of the grip ring 24 and the seal element 22 could be reversed. It will also be appreciated that the spacing between the seal element 22 and the grip ring 24 can be sized in a desired manner (e.g., to accommodate the jaws of the commercially-available crimp tool mentioned above) and that multiple seal elements 22 and/or grip rings 24 could be employed if desired.

While the grip ring 24 has been illustrated in the above-example as comprising a ring body 60 having a generally rectangular cross-sectional shape, it will be appreciated that the ring body 60 could be formed differently. With reference to Figure 5, a portion of another assembly constructed in accordance with the teachings of the present disclosure is generally indicated by reference numeral 10a. The assembly 10a can be generally similar to the assembly 10 of Figure 1 except that the grip ring 24a has a ring body 60a having a cross-sectional shape that is defined by at least one radius such that the ring body 60a of the grip ring 24a is able to pivot on the semi-toric inner surface 46 of the annular cavity 44a more easily than the grip ring 24 that is depicted in Figures 3 and 4. Stated another way, the ring body 60a has an exterior surface that is shaped in a complementary manner to the semi-toric interior surface 46 of the annular cavity 44a. Relative to the configuration illustrated in Figures 3 and 4, the configuration of the grip ring 24a in this manner may reduce the force that is needed to insert the structure through the grip ring and/or may increase the retention force of the grip ring 24a (i.e., the force needed to pull the structure 12 from the fitting 14a once the structure 12 has been fully inserted into the insertion end 26a of the fitting 14a).

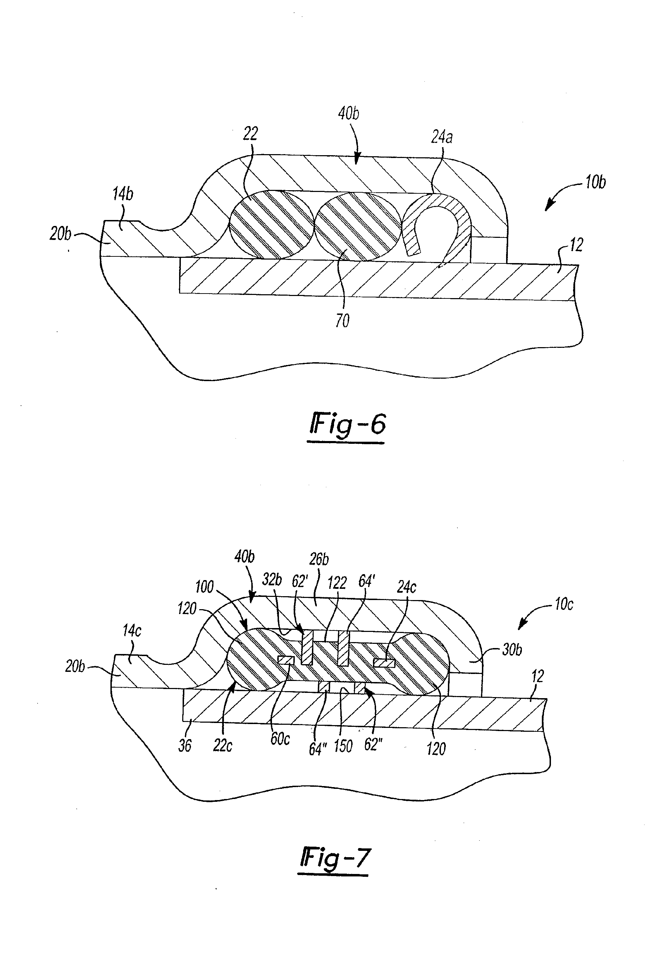

In Figure 6, a portion of a third assembly constructed in accordance with the teachings of the present disclosure is generally indicted by reference numeral 10b. The assembly 10b can include the structure 12 and a fitting 14b, which can be generally similar to the fitting 14 (Fig. 2) except as detailed herein. In this example, the mount 40b of the insertion end 26b can be sized to receive the seal element 22, a spacing element 70, and the grip ring 24a. While the grip ring 24 is depicted in Figure 6 as being similar to the grip ring employed in Figure 5, it will be appreciated that the grip ring depicted in Figure 4 could be employed in the alternative. The spacing element 70 can be any type of structure that is configured to axially space the seal element 22 apart from the grip ring 24a and need not be configured to form a seal. In the particular example provided however, the spacing element 70 is a seal that is configured to sealingly engage against the body 20b and the structure 12. Any type of seal may be employed for the spacing element 70, but in the example provided, the spacing element 70 is an O-ring that is identical to that which is employed for the seal element 22. It will be appreciated, however, that if a seal is employed as the spacing element 70, the seal need not be identical to that which is employed for the seal element 22.

In situations where a seal is employed for the spacing element 70, those of skill in the art will appreciate that the spacing element 70 is a secondary seal (whereas the seal element 22 is a primary seal).

In the example of Figure 7, a portion of a fourth assembly constructed in accordance with the teachings of the present disclosure is generally indicted by reference numeral 10c. The assembly 10c can include a fitting 14c that is similar to the fitting 14b of Figure 6 except as described herein. In this example, a seal and gripping assembly 100 is employed in the mount 40b in the insertion end 26b of the body 20b. The seal and gripping assembly 100 can comprise a sealing element 22c and a grip ring 24c.

The grip ring 24c can have a ring body 60c, a first set of gripping elements 62' and a second set of gripping elements 62". The ring body 60c can be a circumferentially extending structure to which the first and second sets of gripping elements 62' and 62" can be coupled. The first set of gripping elements 62' can comprise first teeth 64' that can extend in a first direction that is radially outwardly from the ring body 60c and axially toward the abutting wall 30b, while the second set of gripping elements 62" can comprise second teeth 64" that can extend in a second direction that can be radially inwardly from the ring body 60c and axially away from the abutting wall 30b. The first teeth 64 can be disposed in one or more rows (two rows are employed in the particular example illustrated) and can be configured to engage the interior surface 32b of the insertion end 26b to inhibit axial movement of the grip ring 24c in a direction that would tend to withdraw the grip ring 24c directly from the insertion end 26c. The second teeth 64 can be disposed in one or more rows (two rows are employed in the particular example illustrated) and can be configured to engage the exterior surface 50 of the end 36 of the structure 12 to inhibit axial movement of the grip ring 24c in a direction that would permit the grip ring 24c from being withdrawn from the end 36 of the structure 12. The grip ring 24c can be unitarily formed as a continuous annular structure (i.e., in an endless manner). In the particular example provided, however, the grip ring 24c is formed in a discontinuous manner from sheet stock (e.g., carbon steel sheet metal, stainless steel sheet metal) through a progressive die, fourslide or multi-slide. If desired, the ends of the sheet stock material may be joined together in an appropriate manner, such as welding. The grip ring 24c can be subjected to secondary processes, such as plating or heat treating, if desired.

The seal element 22c can be coupled to the grip ring 24c in any desired manner. In the particular example provided, the seal element 22c is formed from an elastomeric material that is overmolded to the grip ring 24c such that the seal element 22c is cohesively bonded to the grip ring 24c. The seal element 22c can define one or more seal members 120 that can be coupled directly to the grip ring 24c. If desired, the seal element 22c can also comprise one or more link members 122 that can aid in orienting and/or retaining the seal members 120.

It will be appreciated from this disclosure that the differently facing first and second teeth 64' and 64" permit the grip ring 24c to grip to both the body 20b of the fitting 14b and the end 36 of the structure 12. It will also be appreciated that it may be desirable to insert the seal and gripping assembly 100 prior to the formation of the abutting wall 30b.

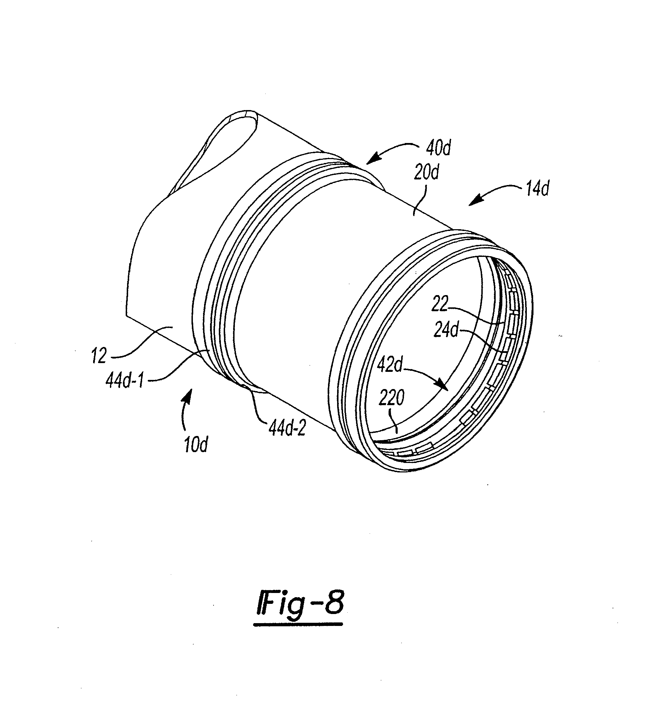

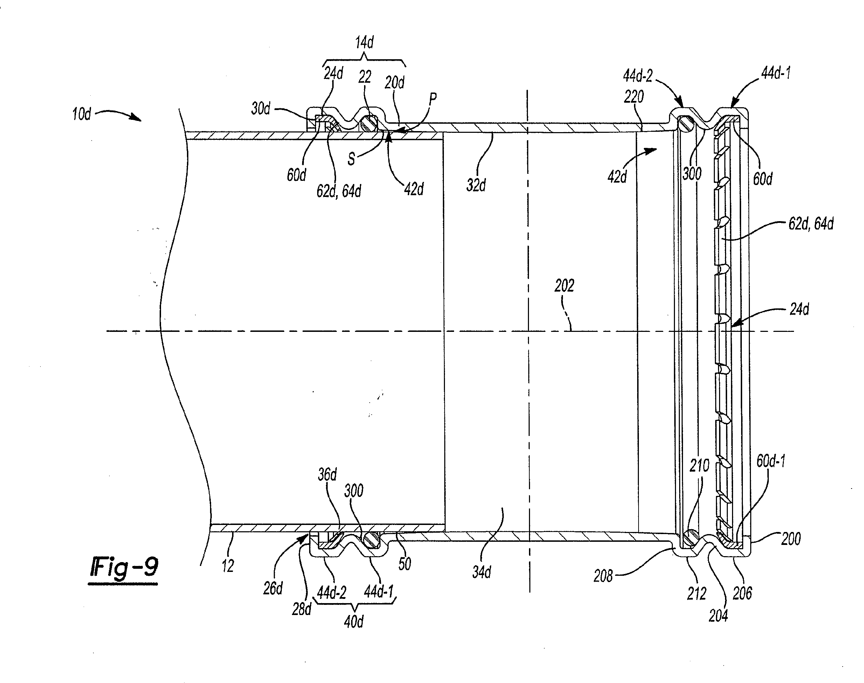

With reference to Figures 8 and 9, a portion of a fifth assembly constructed in accordance with the teachings of the present disclosure is generally indicated by reference numeral 10d. The assembly 10d can comprise a structure 12 and a fitting 14d. The fitting 14d can include a body 20d, a seal element 22, and a grip ring 24d.

The body 20d can be made from any structural but ductile material, such as copper, brass, bronze, stainless steel or another metal. In the example provided, the body 20d is made of a copper alloy so as to eliminate the potential for a galvanic reaction with the copper alloy of the structure 12. The body 20d can include a hollow insertion end 26d that can have an end face 28d, an abutting wall 30d and an interior surface 32d. A cavity 34d defined by insertion end 26d can be configured to receive an associated end 36d of the structure 12.

Optionally, the body 20d can include a mount 40d and a stop 42d. The mount 40d can be configured to hold and position the seal element 22 and/or the grip ring 24d, while the stop 42d can be a feature that inhibits the insertion of the structure 12 into the cavity 34d beyond a predetermined distance. For example, the mount 40d can define a pair of annular cavities 44d-1, 44d-2. The annular cavity 44d-1 can be defined by a first wall member 200, which can be disposed generally perpendicular to the longitudinal axis 202 of the body 20d, a second wall member 204 that can be generally V-shaped in cross-section, and a third wall member 206 that can extend axially between the first and second wall members 200, 204. If desired, the first wall member 200 and/or the second wall member 204 can extend radially inwardly to an extent where it/they can aid in supporting the end 36d of the structure 12 (e.g., to help align the structure 12 to the longitudinal axis 202). The annular cavity 44d-2 can be defined by the second wall member 204, a fourth wall member 208, which can have a concave inner surface 210, and a fifth wall member 212 that can extend axially between and connect the second wall member 204 to the fifth wall member 212. As another example, the stop 42d can comprise a frusto-conical zone 220 on the interior surface 32d that can align the structure 12 to the longitudinal axis 202, as well as to inhibit insertion of the end 36d of the structure 12 into the interior cavity 34d beyond a predetermined dimension.

The grip ring 24d can be configured to permit the end 36d of the structure 12 to be inserted into the insertion end 26d but to resist withdrawal of the end 36d of the structure 12 from the insertion end 26d. The grip ring 24d can have a ring body 60d and a plurality of gripping elements 62d that can be coupled to the ring body 60d. In the particular example provided, the ring body 60d defines a circumferentially extending structure that is abutted against the abutting wall 30d, while the gripping elements 62d comprise circumferentially spaced-apart teeth 64d that are resiliently coupled to a proximal end 60d-1 of the ring body 60d. The teeth 64d can extend from the ring body 60d in direction that is radially-inward and axially away from the proximal end 60d-1 of the ring body 60d. The grip ring 24d can be received in the cavity 34d in the insertion end 26d and can be coupled to the body 20d in a manner that limits movement of the grip ring 24d in an axial direction relative to the body 20d (e.g., such that movement of the grip ring 24d in a direction that would withdraw the grip ring 24d from the insertion end 26d causes the grip ring 24d to contact the abutting wall 30d). In the example provided, the grip ring 24d is received in the annular cavity 44d-1 in the mount 40d such that grip ring 24d abuts the first wall member 200 and is at least partly supported by the second wall member 204 (e.g., the teeth 64d lie along a portion of a side of the second wall member 204) to thereby limit axial movement of the grip ring 24d. The grip ring 24d can have open ends (not shown), which permits the grip ring 24d to be inserted into the annular cavity 44d-1 after the body 20d of the fitting 14d has been formed. It will be appreciated, however, that the grip ring 24d could be formed in an endless manner and that in such case, it may be desirable to install the grip ring 24d into the fitting 14d prior to the formation of the first wall member 200.

The fitting 14d can be coupled to the structure 12 by inserting the end 36d of the structure 12 into the insertion end 26d and forcing the end 36d axially through the grip ring 24d and the seal element 22. The seal element 22 may be configured such that it does not sealingly engage one or both of the interior surface 32d of the insertion end 26d and the exterior surface 50 of the end 36d of the structure 12. In the particular example provided, however, the seal element 22 sealingly engages both the interior surface 32d of the insertion end 26d and the exterior surface 50 of the end 36d of the structure 12 when the end 36d of the structure 12 is inserted through the seal element 22. It will be appreciated that the grip ring 24d is configured to inhibit axial withdrawal of the end 36d of the structure 12 from the insertion end 26d. A commercially-available crimping tool (not shown), such as CT400 crimp tool marketed by Rigid or an M20+ crimp tool marketed by Stanley Bostitch, can be employed to deform the insertion end 26d of the fitting 14d to substantially permanently couple the fitting 14d to the structure 12d. Additionally or alternatively, insertion end 26d of the fitting 14d could be deformed by the commercially available crimping tool to create or improve sealing engagement of the seal element 22 with the interior surface 32d of the insertion end 26 and/or the exterior surface 50d of the end 36d of the structure 12.

It will be appreciated that this configuration provides a leak path P where pressurized fluid may leak in a space S between the end 36d of the structure 12 and the mount 40d and can urge the seal element 22 against both a sloped frusto-conical surface 300 of the second wall member 204 and the exterior surface of the structure 12. Movement of the seal element 22 in this manner drives the seal element 22 in an axial direction (i.e., axially outwardly of the insertion end 26d) so that it is further compressed between sloped frusto-conical surface 300 and the exterior surface of the structure 12 to provide improved sealing.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. An assembly comprising:
a fitting body having an insertion end, the insertion end including a mount and an abutting wall;
a structure having an end that is received into the insertion end of the fitting body;
a first seal element in the mount and sealingly engaged to the structure and the fitting body; and
a grip ring in the mount, the grip ring comprising a ring body and a plurality of first teeth that are resiliently coupled to the ring body, the first teeth being engaged to the end of the structure, the ring body abutting the abutting wall.

2. An assembly as claimed in Claim 1, wherein the first seal element is fixedly coupled to the grip ring.

3. An assembly as claimed in Claim 2, wherein a second seal element is fixedly coupled to the grip ring on a side opposite the first seal element.

4. An assembly as claimed in Claim 3, wherein at least one link member is disposed between the first and second seal elements, the at least one link member being integrally formed with the first and second seal elements.

5. An assembly as claimed in any of Claims 2 to 4, wherein the first seal element is cohesively bonded to the grip ring.

6. An assembly as claimed in any preceding Claim, wherein the grip ring comprises a plurality of second teeth that are resiliently coupled to the ring body, the second teeth being engaged to the fitting body.

7. An assembly as claimed in any preceding Claim, wherein the mount comprises a single cavity into which the first seal element and the grip ring are received, wherein a spacing element is received between the first seal element and the grip ring, and wherein the spacing element comprises a seal.

8. An assembly as claimed in any of Claims 1 to 6, wherein the mount defines two axially spaced-apart annular cavities, and wherein the first seal element is received in a first one of the annular cavities and wherein the grip ring is received in a second one of the annular cavities.

9. An assembly as claimed in Claim 8, wherein each annular cavity defines a semi-toric interior surface.

10. An assembly as claimed in Claim 8 or 9, wherein the ring body of the grip ring has an exterior surface that is complementary to the semi-toric interior surface of an associated one of the annular cavities.

11. An assembly as claimed in any preceding Claim, wherein the fitting body defines a frusto-conical zone that is configured to engage the end of the structure.

12. An assembly as claimed in Claim 11, wherein the first seal element is disposed between the conical zone and the grip ring.

13. An assembly as claimed in any preceding Claim, wherein the first teeth of the grip ring lie along a portion of a generally V-shaped wall member of the fitting body.

14. An assembly as claimed in Claim 1, wherein the first seal element is abutted against a frusto-conical surface and wherein movement of the first seal element toward the frusto-conical surface due to fluid pressure between the structure and the fitting body drives the first seal element against the exterior surface of the structure.

15. An assembly as claimed in Claim 1 wherein the mount comprises a first annular cavity and a second annular cavity, the first annular cavity being defined by a first wall member which is disposed generally perpendicular to a longitudinal axis of the fitting body and a second wall member having a generally V-shaped profile, the second annular cavity being defined by the second wall member and a third wall member; and
the first seal element being in the second annular cavity and disposed between the second and third wall members, the first seal element being sealingly engaged to the structure and the fitting body.
